(19) **Europäisches Patentamt**
**European Patent Office**
**Office européen des brevets**

(11) **EP 3 740 828 B1**

(12) **EUROPÄISCHE PATENTSCHRIFT**

(45) Veröffentlichungstag und Bekanntmachung des Hinweises auf die Patenterteilung:
**31.01.2024   Patentblatt 2024/05**

(21) Anmeldenummer: **18829810.3**

(22) Anmeldetag: **18.12.2018**

(51) Internationale Patentklassifikation (IPC):
**G05B 19/39** *(2006.01)*    **G05B 19/406** *(2006.01)*
**G01D 3/08** *(2006.01)*    **G01P 21/02** *(2006.01)*

(52) Gemeinsame Patentklassifikation (CPC):
**G05B 19/39; G01D 3/08; G01P 21/02;**
**G05B 19/406;** G05B 2219/34484;
G05B 2219/37181; G05B 2219/37508

(86) Internationale Anmeldenummer:
**PCT/EP2018/085695**

(87) Internationale Veröffentlichungsnummer:
**WO 2019/141475 (25.07.2019 Gazette 2019/30)**

(54) **VERFAHREN ZUM ÜBERPRÜFEN EINES ZEITDISKRETEN SIGNALWERTS EINES SENSORS AUF FEHLERFREIHEIT**

METHOD FOR CHECKING A TIME-DISCRETE SIGNAL VALUE OF A SENSOR FOR FREEDOM FROM ERRORS

PROCÉDÉ DE VÉRIFICATION DE LA PRÉCISION D'UNE VALEUR DE SIGNAL D'UN CAPTEUR SANS ERREUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2018   DE 102018100878**

(43) Veröffentlichungstag der Anmeldung:
**25.11.2020   Patentblatt 2020/48**

(73) Patentinhaber: **ebm-papst Landshut GmbH**
**84030 Landshut (DE)**

(72) Erfinder:
• **KUTSCHBACH, Frank**
**49492 Westerkappeln (DE)**
• **RIEDMÜLLER, Franz**
**84091 Attenhofen (DE)**
• **WALD, Stephan**
**48341 Altenberge (DE)**

• **WEINGART, Markus**
**84056 Rottenburg (DE)**
• **BERGHAMMER, Anton**
**85107 Baar-Ebenhausen (DE)**
• **GOLDNER, Robert**
**84036 Landshut (DE)**
• **GREINER, Erich**
**84175 Schalkham (DE)**
• **KLEINE, Volker**
**49143 Bissendorf (DE)**

(74) Vertreter: **Staeger & Sperling**
**Partnerschaftsgesellschaft mbB**
**Sonnenstraße 19**
**80331 München (DE)**

(56) Entgegenhaltungen:
**DE-A1-102006 046 286    DE-A1-102015 211 258**
**US-A1- 2008 176 530**

EP 3 740 828 B1

**Beschreibung**

Die Erfindung betrifft ein Plausibilitätsverfahren zum Überprüfen eines zeitdiskreten Signalwerts eines Sensors auf Fehlerfreiheit.

Insbesondere bei sicherheitsrelevanten Einrichtungen, wie beispielsweise Gasgebläsen, ist eine fehlersichere Übertragung zeitdiskreter Messwerte, insbesondere der Gasgebläsedrehzahl, von einer Gebläseelektronik an eine Gasbrennersteuerung nötig.

Aus dem Stand der Technik ist bekannt, dass der Ansteuerwert für das Gasgebläse und das Rotationssignal auf getrennten elektrischen Pfaden übertragen werden. Aufgrund von Sicherheitsanforderungen muss zwingend vorgesehen werden, dass das Rotationssignal möglichst fehlerfrei, insbesondre in redundanter Weise auf direktem Wege an die sicherheitsrelevante Steuerung angeschlossen wird. Als druckschriftlicher Stand der Technik offenbart die WO 2005/109132 ein Verfahren, in dem mehrere Messwerte erfasst und fehlersicher übertragen werden. Hierbei sind allerdings redundante Einrichtungen erforderlich, die gegenüber dem Stand der Technik Kostennachteile aufweisen.

Weiterer druckschriftlicher Stand der Technik im vorliegenden technischen Gebiet, welcher den Oberbegriff des Anspruchs 1 widerspiegelt, ist in dem Dokument DE 10 2006 046286 A1 offenbart.

Der Erfindung liegt deshalb die Aufgabe zugrunde, ein kostengünstiges Verfahren bereitzustellen, mit dem zeitdiskrete Sensormesswerte auf Fehlerfreiheit überprüft werden können.

Diese Aufgabe wird durch die Merkmalskombination gemäß Patentanspruch 1 gelöst.

Erfindungsgemäß wird ein Verfahren zum Überprüfen eines zeitdiskreten Signalwerts eines Sensors auf Fehlerfreiheit vorgeschlagen, bei dem der Signalwert des Sensors durch zwei unterschiedliche Auswerteeinrichtungen einer Elektronik in einen ersten Messwert und einen zweiten Messwert umgewandelt wird. Die ersten und zweiten Messwerte werden von der Elektronik zu einer Steuerung übertragen und durch die Steuerung wird aus dem ersten Messwert ein erstes Steuersignal und parallel dazu aus dem zweiten Messwert ein zweites Steuersignal berechnet. Die Steuerung umfasst einen Vergleicher, welcher das erste Steuersignal und das zweite Steuersignal zur Überprüfung ihrer Identität vergleicht.

Das Vergleichen des ersten Steuersignal und des zweiten Steuersignals erfolgt vorzugsweise in vordefinierten, beschränkten Zeiträumen.

Der erfindungsgemäße Vergleich des ersten Steuersignals und des zweiten, Steuersignals mittels der verschiedenartigen Auswerteeinrichtungen der Elektronik bietet die Möglichkeit, zwei redundante, unterschiedlich erfasste Messwerte einem logischen Vergleich zu unterziehen und aus dem Vergleichsergebnis auf die Fehlerfreiheit, d.h. die Vergleichswerte sind identisch, bzw. einen Fehler, d.h. die Vergleichswerte weichen ab, zu schließen. Daraus ergibt sich eine Plausibilitätsprüfung der Messwerte des Sensors und mithin eine Absicherung der gelieferten Daten.

Als Auswerteeinrichtungen können beispielsweise fehlersichere speicherprogrammierbare Steuerungen, Feuerungsautomaten oder Gas-Luftverbundsysteme für Brenner verwendet werden.

Ferner ist das Verfahren vorteilhafterweise dadurch gekennzeichnet, dass die Elektronik und die Steuerung über eine serielle Datenverbindung verbunden sind und die ersten und zweiten Messwerte von der Elektronik seriell zu der Steuerung übertragen werden. Das hat den Vorteil, dass ist im Vergleich zu Systemen mit getrennter Signalübertragung kein wesentlicher Mehraufwand und gleichzeitig nur eine einzige Signalleitung erforderlich ist. Vorzugsweise ist die Elektronik als Motorelektronik ausgebildet.

Die Erfindung findet einen vorteilhaften Einsatz bei Gasgebläsen bzw. Gebläsemotoren, wobei der Sensor ein Rotationssensor ist, der als zeitdiskreten Signalwert ein Rotationssignal des Gebläsemotors erfasst.

Ferner ist bei dem Verfahren vorgesehen, dass die Steuerung als sicherheitsrelevante Steuerung ausgebildet ist, wie sie bei Gas-Luft-Verbundsystemen zum Einsatz kommen.

Erfindungsgemäß werden bei einer Verwendung des Verfahrens bei einem Gebläsemotor der erste Messwert in eine erste Drehzahl und der zweite Messwert in eine zweite Drehzahl umgewandelt. Erfindungsgemäß werden zur Umwandlung des ersten und zweiten Messwerts in die entsprechende Drehzahl drehzahläquivalente und/oder korrespondierende Werte basierend auf unterschiedlichen Zeitbasen für die Umwandlung genutzt werden.

Die beiden Drehzahlen werden anschließend durch den Vergleicher zur Überprüfung ihrer Identität verglichen. Soweit die erste Drehzahl identisch zu der zweiten Drehzahl ist, ist die Plausibilitätsprüfung erfolgreich bestanden. Andernfalls liegt ein Fehler vor, beispielsweise in einer oder beiden der Auswerteeinrichtungen oder in der Datenübertragung.

Gegenüber dem Stand der Technik können alle zur Steuerung erforderlichen Signale über eine gemeinsame serielle Datenübertragung übermittelt werden, was die Übertragung des Drehzahlsignals mit einschließt. Die dabei erforderlichen Sicherheitsanforderungen zur Fehlersicherheit des Drehzahlsignals werden über die Plausibilitätsprüfung erfüllt.

Die Steuerung umfasst in einem Ausführungsbeispiel vorzugsweise ferner einen Drehzahl-Regler. Alternativ kann die Drehzahlregler-Einheit auch in der Motorsteuerung enthalten sein. Der Drehzahl-Regler berechnet aus einem gelieferten Drehzahl-Sollwert und der berechneten ersten oder zweiten Drehzahl einen Ansteuerwert, der über dieselbe serielle Datenübertragung an die Motorelektronik geleitet wird. Die Motorelektronik versorgt den Gebläsemotor mit Energie, versetzt ihn in Rotation und regelt seine Motordrehzahl. Drehzahlregelung und Drehzahlrückmeldung verlaufen somit über ein und dieselbe Datenübertragung.

Bei dem Verfahren wird in einer Ausführungsvariante ferner vorgesehen, dass, wenn beim Vergleichen des ersten Steuersignal und des zweiten Steuersignals eine Abweichung festgestellt wird, ein Warnsignal ausgegeben wird. Das Warnsignal kann beispielsweise durch Warnleuchte als optische Anzeige wiedergegeben werden. Auch kann ein Korridor festgelegt werden, der maximale Abweichungen der ersten und zweiten Drehzahlen festlegt. Sollte der Vergleichswert der ersten und zweiten Drehzahlen außerhalb des Korridors liegen, kann der Gebläsemotor in einen Notbetrieb versetzt oder abgestellt werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:

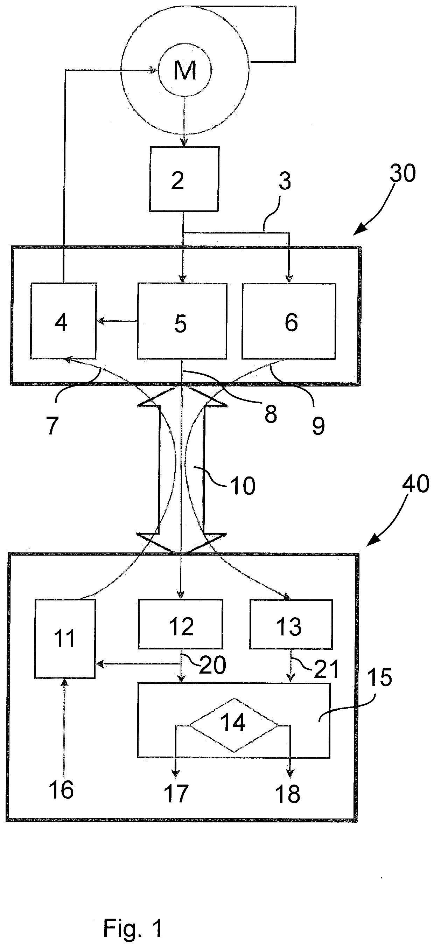

Fig. 1     eine schematischen Verfahrensablauf am Beispiel eines Gebläsemotors.

Die Gebläsedrehzahlregelung des Gebläsemotors M in Fig. 1 erfolgt über die Motorelektronik 30, welche über eine einzige serielle Datenverbindung 10 mit der sicherheitsrelevanten Steuerung 40 verbunden ist. Die Motorelektronik 30 umfasst die Motorsteuerung 4, die Auswertung 5 und die von der Auswertung 5 verschiedenartige zusätzliche Auswertung 6. Die sicherheitsrelevante Steuerung 40 umfasst den Drehzahl-Regler 11, die Berechnungseinheit 12, die Berechnungseinheit 13 sowie den Vergleicher 15.

Die Drehzahl des Gebläsemotors M wird über den Rotationssensor 2 gemessen und erfasst. Der Rotationssensor 2 liefert das Rotationssignal 3 an die Auswertung 5 und parallel dazu an die Auswertung 6. Die Auswertungen 5, 6 wandeln das Rotationssignal 3 jeweils eigenständig mit unabhängigen Auswerteverfahren in jeweils einen Messwert 8, 9 um, die anschließend über die serielle Datenverbindung 10 an die Berechnungseinheit 12 bzw. die Berechnungseinheit 13 der sicherheitsrelevanten Steuerung 40 geliefert werden. Aus den beiden unabhängigen Messwerten 8, 9 berechnen die Berechnungseinheiten 12, 13 der sicherheitsrelevanten Steuerung 40 jeweils Werte für die erste Drehzahl 20 und die zweite Drehzahl 21, welche dem Vergleicher 15 für einen Wertevergleich zugeführt werden. Im Vergleicher 15 der sicherheitsrelevanten Steuerung 40 erfolgt die Identitätsprüfung 14 der beiden Drehzahlen 20, 21 als Plausibilitätsprüfung. Bei Identität erfolgt die Ausgabe OK 18, d.h. das System funktioniert korrekt, bei einer Abweichung die Ausgabe FEHLER 17, d.h. es liegt eine zu beseitigende Fehlfunktion beispielsweise in einer oder beiden der Auswertungen 5, 6 oder in der Datenübertragung vor.

Beim Auswerteverfahren wird beispielsweise das Rotationssignal von der ersten Auswertung 5 in zeitlich festen Zeitabständen (z. B. jede einzelne Sekunde) unmittelbar in eine Drehzahl umgerechnet, z. B. 8 Umdrehungen/Sekunde entspricht dem ersten Messwert. Von der zweiten Auswertung 6 werden fortlaufend die Rotationsimpulse gezählt und der jeweils aktuelle Zählerstand (z. B. 6 Umdrehungen entspricht dem zweiten Messwert) an die sicherheitsrelevanten Steuerung 40 übertragen. Der Vergleicher 15 kann somit aus der Drehzahlinformation aus dem ersten Messwert und aus zwei übertragenen Zählerständen des zweiten Messwerts bezogen auf die Zeit (1 Sekunde) zwischen den beiden Datenübertragungen die Messwerte, die Datenübertragung, die Motorelektronik 30 und die sicherheitsrelevanten Steuerung 40 auf Plausibilität überprüfen. Soweit bis zur nächsten Datenübertragung, im Beispiel eine Sekunde später, die Drehzahl gleich geblieben ist, muss der Zählerstand der zweiten Auswertung 6 sich um genau diesen Betrag erhöht haben (erster Messwert=8; zweiter Messwert=8+6=14). Aus dem Unterschied der beiden Zählerstände und der Zeit zwischen den beiden Übertragungen kann die Drehzahl berechnet und mit dem übertragenen Drehzahlwert verglichen werden:

$$\text{Erster Messwert} = 8 \text{ Umdrehungen/Sekunde}$$

$$\text{Zweiter Messwert} = (14 \text{ Umdrehungen} - 6 \text{ Umdrehungen})/\text{Sekunde} =$$

$$8 \text{ Umdrehungen/Sekunde}$$

Da jeder Zähler eine begrenzte Anzahl von Dezimalstellen hat, findet im dauerhaften Betrieb entweder ein Zählerüberlauf statt, d.h. der Zähler springt z: B. vom Wert 9999 auf 0000, oder die Zählerstände müssen regelmäßig auf den Wert Null zurückgesetzt werden. Da somit theoretisch bei aufeinanderfolgenden Zählerständen der gleiche Wert übertragen werden könnte, findet die Datenübertragung vorzugsweise in unregelmäßigen Abständen statt. Somit ist sichergestellt, dass Zählerstände unterschiedlich sind und Störungen, die beispielsweise in gleicher zeitlicher Folge den Zählerstand falsch zurücksetzen, erkannt werden können.

Der Drehzahl-Regler 11 der sicherheitsrelevanten Steuerung 40 berechnet aus einem gelieferten Drehzahl-Sollwert 16 und der berechneten ersten Drehzahl 20 einen Ansteuerwert 7, der über dieselbe serielle Datenverbindung 10 an die Motorelektronik 30 geleitet wird. Die Motorelektronik 30 versorgt den Gebläsemotor M mit Energie, versetzt ihn in Rotation und regelt seine Motordrehzahl. Die Datenströme verlaufen alle über dieselbe serielle Datenverbindung 10.

## Patentansprüche

1. Verfahren zum Überprüfen eines zeitdiskreten Signalwerts eines Sensors auf Fehlerfreiheit, wobei der Signalwert des Sensors durch zwei unterschiedliche Auswerteeinrichtungen (5, 6) einer Elektronik in einen ersten Messwert (8) und einen zweiten Messwert (9) umgewandelt wird, wobei die ersten und zweiten Messwerte (8, 9) von der Elektronik zu einer Steuerung übertragen und durch die Steuerung aus dem ersten Messwert (8) ein erstes Steuersignal und parallel dazu aus dem zweiten Messwert (9) ein zweites Steuersignal berechnet wird, wobei die Steuerung einen Vergleicher (15) umfasst, welcher das erste Steuersignal und das zweite Steuersignal zur Überprüfung ihrer Identität vergleicht, und wobei der Sensor ein Rotationssensor (2) ist, der als zeitdiskreten Signalwert ein Rotationssignal eines Elektromotors, insbesondere Gebläsemotors (M), erfasst, **dadurch gekennzeichnet, dass** der erste Messwert in eine erste Drehzahl (20) und der zweite Messwert in eine zweite Drehzahl (21) umgewandelt werden, welche durch den Vergleicher (15) zur Überprüfung ihrer Identität verglichen werden, wobei zur Umwandlung des ersten und zweiten Messwerts in die entsprechende Drehzahl (20, 21) drehzahläquivalente und/oder korrespondierende Werte basierend auf unterschiedlichen Zeitbasen für die Umwandlung genutzt werden.

2. Verfahren nach Anspruch 1, **dadurch gekennzeichnet, dass** die Elektronik und die Steuerung über eine serielle Datenverbindung (10) verbunden sind und die ersten und zweiten Messwerte (8, 9) von der Elektronik seriell zu der Steuerung übertragen werden.

3. Verfahren nach Anspruch 3, **dadurch gekennzeichnet, dass** die Steuerung als sicherheitsrelevante Steuerung (40) ausgebildet ist.

4. Verfahren nach Anspruch 1, **dadurch gekennzeichnet, dass** die Steuerung einen Drehzahl-Regler (11) umfasst oder der Drehzahl-Regler in einer Motorsteuerung enthalten ist.

5. Verfahren nach dem vorigen Anspruch, **dadurch gekennzeichnet, dass** und die erste oder die zweite Drehzahl (20, 21) an den Drehzahl-Regler (11) übermittelt wird, wobei der Drehzahl-Regler (11) einen Ansteuerwert (7) seriell an die Motorsteuerung der Elektronik übermittelt, und wobei die Motorsteuerung eine Motordrehzahl des Elektromotors regelt.

6. Verfahren nach einem der Ansprüche 1 bis 5, **dadurch gekennzeichnet, dass** die Elektronik eine Motorelektronik (30) ist.

7. Verfahren nach einem der Ansprüche 1 bis 3, **dadurch gekennzeichnet, dass** wenn bei dem Vergleichen des ersten Steuersignal und des zweiten Steuersignals eine Abweichung festgestellt wird, ein Warnsignal ausgegeben wird.

8. Verfahren nach einem der Ansprüche 1 bis 3, **dadurch gekennzeichnet, dass** das Vergleichen des ersten Steuersignal und des zweiten Steuersignals in vordefinierten, beschränkten Zeiträumen erfolgt.

## Claims

1. A method for checking a time-discrete signal value of a sensor for freedom from errors, wherein the signal value of the sensor is converted to a first measurement value (8) and a second measurement value (9) by two different evaluators (5, 6) of electronics, wherein the first and second measurement values (8, 9) are transmitted from the electronics to a controller, and a first control signal is calculated from the first measurement value (8) and a second control signal is calculated from the second measurement value (9) in parallel thereto by the controller, wherein the controller comprises a comparator (15) comparing the first control signal and the second control signal for checking their identity, and wherein the sensor is a rotation sensor (2) sensing a rotation signal of an electric motor, in particular a blower motor (M), as the time-discrete signal value, **characterized in that** the first measurement value is converted to a first speed (20) and the second measurement value is converted to a second speed (21) which are compared by the comparator (15) for checking their identity, wherein for conversion of the first and second measurement values to the respective speed (20, 21), speed-equivalent and/or corresponding values based on different times bases are utilized for the conversion.

2. The method of claim 1, **characterized in that** the electronics and the controller are connected via a serial data connection (10) and the first and second measurement values (8, 9) are serially transmitted from the electronics to the controller.

3. The method of claim 3, **characterized in that** the controller is designed as a safety-relevant controller (40).

4. The method of claim 1, **characterized in that** the controller comprises a speed governor (11) or the speed governor is contained in a motor controller.

5. The method of the preceding claim, **characterized in that** and the first or the second speed (20, 21) is transferred to the speed governor (11), wherein the speed governor (11) serially transfers a drive value (7) to the motor controller of the electronics, and wherein the motor controller governs a motor speed of the electric motor.

6. The method of any one of claims 1 to 5, **characterized in that** the electronics are motor electronics (30).

7. The method of any one of claims 1 to 3, **characterized in that** a warning signal is issued if, when comparing the first control signal and the second control signal, a deviation is determined.

8. The method of any one of claims 1 to 3, **characterized in that** the comparing the first control signal and the second control signal occurs in predefined, limited periods of time.


**Revendications**

1. Procédé permettant de vérifier l'exactitude d'une valeur de signal discrète en temps d'un capteur, dans lequel la valeur de signal du capteur est convertie en une première valeur de mesure (8) et une deuxième valeur de mesure (9) par deux dispositifs d'évaluation différents (5, 6) d'un système électronique, dans lequel la première et la deuxième valeur de mesure (8, 9) sont transmises par le système électronique à un système de commande, et le système de commande calcule un premier signal de commande à partir de la première valeur de mesure (8) et calcule en parallèle un deuxième signal de commande à partir de la deuxième valeur de mesure (9), dans lequel le système de commande comprend un comparateur (15) qui compare le premier signal de commande et le deuxième signal de commande pour vérifier leur identité, et dans lequel le capteur est un capteur de rotation (2) qui détecte comme valeur de signal discrète en temps un signal de rotation d'un moteur électrique, en particulier d'un moteur de ventilateur (M), **caractérisé en ce que** la première valeur de mesure est convertie en une première vitesse de rotation (20) et la deuxième valeur de mesure est convertie en une deuxième vitesse de rotation (21) qui sont comparées par le comparateur (15) pour vérifier leur identité, dans lequel, pour convertir la première et la deuxième valeur de mesure en vitesse de rotation (20, 21) correspondante, des valeurs équivalentes et/ou correspondant à la vitesse de rotation sur la base de différentes base de temps sont utilisées pour la conversion.

2. Procédé selon la revendication 1, **caractérisé en ce que** le système électronique et le système de commande sont reliés par une liaison de données série (10) et la première et la deuxième valeur de mesure (8, 9) sont transmises en série par le système électronique au système de commande.

3. Procédé selon la revendication 3, **caractérisé en ce que** le système de commande est réalisé sous la forme d'un système de commande (40) de sécurité.

4. Procédé selon la revendication 1, **caractérisé en ce que** le système de commande comprend un régulateur de vitesse de rotation (11) ou le régulateur de vitesse de rotation est contenu dans un système de commande de moteur.

5. Procédé selon la revendication précédente, **caractérisé en ce que** et la première ou la deuxième vitesse de rotation (20, 21) est transmise au régulateur de vitesse de rotation (11), dans lequel le régulateur de vitesse de rotation (11) transmet en série une valeur de pilotage (7) au système de commande de moteur du système électronique, et dans lequel le système de commande de moteur régule une vitesse de rotation de moteur du moteur électrique.

6. Procédé selon l'une quelconque des revendications 1 à 5, **caractérisé en ce que** le système électronique est un système électronique de moteur (30).

7. Procédé selon l'une quelconque des revendications 1 à 3, **caractérisé en ce que** si un écart est constaté lors de la comparaison du premier signal de commande et du deuxième signal de commande, un signal d'avertissement est émis.

8. Procédé selon l'une quelconque des revendications 1 à 3, **caractérisé en ce que** la comparaison du premier signal de commande et du deuxième signal de commande est effectuée dans des périodes de temps limitées, prédéfinies.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005109132 A

- DE 102006046286 A1